# EUROPEAN PATENT APPLICATION

(11) **EP 3 258 379 A1**
(43) Date of publication of application: **20.12.2017**
(21) Application number: 16275083.0
(22) Date of filing: 14.06.2016
(51) Int. Cl.: G06F 11/36

(54) **AVIONCIS GROUND TEST RIG SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Test apparatus comprising:
- a computer-implemented core test unit (12) having loaded therein a plurality of software modules, each software module having a driver (14a) associated therewith, and being configured, when activated, to perform a respective specified test by simulating a predetermined condition, generating at least one stimulus signal and receiving response data;
- a plurality of adaptor units (16), each adaptor unit being configured to be connected between said core test unit (12) and a unit under test (18) so as to facilitate data transfer therebetween, wherein each adaptor unit (16) is associated with a respective software module of said core test unit (12) and includes a data storage module having stored therein operational data configured to activate a specified software module, including a respective driver (14a), when it is connected and said operational data is transferred to said core test unit (12), in use, and each said adaptor unit (16) being configured to effect data transfer between said respective specified software module, when activated, and said unit under test (18) by transmitting said at least one stimulus signal received from said specified software module to said unit under test and transmitting said response data received from said unit under test to said specified software module; and
- a user interface module (10) configured to output, in use, test data generated using said response data.

## Description

This invention relates generally to a test apparatus and, more particularly but not necessarily exclusively, to a ground test rig system for avionics applications that can be adapted to provide a systems test environment compatible with a specified unit under test.

It is well known in the field of, for example, avionics to provide a bespoke test rig to perform a specified ground test in respect of an air vehicle or, more specifically, an element or component thereof. For example, one such known test rig for a military aircraft comprises a series of hydraulic rams and a software application configured to cause the rams to apply stimuli is the form of respective loads to an aircraft body across several pressure points to simulate the demanding conditions likely to be encountered by such an aircraft during its lifetime. The reactions of the aircraft body to the applied stresses are measured in the form of response signals received over thousands of dedicated monitoring channels to assess how the aircraft is reacting over time. In other words, the software application and associated hydraulic rams simulate the stresses encountered by the aircraft over many hours 'flight time', and its responses monitored, without the need for the aircraft to actually leave the ground.

More generally, ground testing in avionics is an essential element of all new aircraft designs, or an aircraft design that has undergone significant change, and all aspects, elements and systems of the aircraft are required to undergo rigorous ground testing before it can be certified for flight. For many years, in this regard, avionics systems development, test and support has relied upon the availability of suitable test rigs which include a mixture of real avionic hardware, software for simulation and stimulation and a central data acquisition and analysis facility. In general, each single use test facility is only configured to perform a single test and can only test a single blackbox, so test engineers often have to work in a shift pattern to cope with high demand.

Furthermore, the footprint of many such test rigs is large: the above-described test rig, for example, fills a large room, so associated infrastructure costs are high, which is especially disadvantageous in relation to test rigs that are rarely used. In many known test rigs, such as the one described above, real aircraft equipment is consumed and lifed, which further increases costs and is particularly disadvantageous where such equipment is scarce. Other disadvantages include the fact that rig configuration can be difficult to maintain, and ongoing facility support costs are high. Obsolescence in an ever-changing field is frequent and can also be expensive.

It is an object of aspects of the present invention to address at least some of these issues and, in accordance with a first aspect of the present invention, there is provided test apparatus comprising:
- a computer-implemented core test unit having loaded therein a plurality of software modules, each software module having a driver associated therewith, and being configured, when activated, to perform a respective specified test by simulating a predetermined condition, generating at least one stimulus signal and receiving response data;
- a plurality of adaptor units, each adaptor unit being configured to be connected between said core test unit and a unit under test so as to facilitate data transfer therebetween, wherein each adaptor unit is associated with a respective software module of said core test unit and includes a data storage module having stored therein operational data configured to activate a specified software module, including a respective driver, when it is connected and said operational data is transferred to said core test unit, in use, and each said adaptor unit being configured to effect data transfer between said respective specified software module, when activated, and said unit under test by transmitting said at least one stimulus signal received from said specified software module to said unit under test and transmitting said response data received from said unit under test to said specified software module; and
- a user interface module configured to output, in use, test data generated using said response data.

In an exemplary embodiment, the core test unit may comprise three operational layers, wherein an interface is defined between adjacent layers to facilitate communication therebetween. The core test unit may comprise a first layer supporting a configurable user interface, a second layer including said plurality of software modules, and a third layer accommodating said plurality of drivers. The third layer may additionally contain a rig configuration file for receiving and/or storing data representative of said unit under test and data representative of at least one of said activated software modules.

In an exemplary embodiment, the operational data stored in said data storage module may comprise data representative of at least one software module to be activated, data defining a mapping of said activated software module to said core test unit and data defining a mapping of said unit under test to said core test unit.

Each adaptor unit optionally comprises one or more physical connectors configured to connect said adaptor unit to a respective unit under test.

According to another aspect of the present invention, there is provided an avionics ground test rig system comprising apparatus substantially as described above, wherein said software test modules are each configured to perform an avionics ground test, and each said unit under test comprises an avionics blackbox.

According to yet another aspect of the present invention, there is provided an adaptor unit for test apparatus substantially as described above, or a test rig system substantially as described above, comprising a housing having a first set of one or more external physical connectors configured to electrically connect said adaptor unit to a specified unit under test, and a second set of one or more external physical connectors configured to electrically connect said adaptor unit to said core test unit, said housing including a data storage element on which is stored said operational data.

In an exemplary embodiment, the second set of one or more external physical connectors may be configured to prevent incorrect mechanical connection of the adaptor unit to said core test unit. Alternatively, or in addition, the second set of one or more external connectors may be further configured to restrict or prevent power transfer between said adaptor unit and said core test unit, unless and until said adaptor unit is correctly connected to said core test unit. In an exemplary embodiment, the second set of one or more external connectors may comprise a two-phase lockout circuit, configured to prevent incorrect mechanical connection of the adaptor unit to said core test unit and/or monitor the integrity of a connection between said adaptor unit and said core test unit and prevent power transfer therebetween unless and until they are correctly connected. In one specific exemplary embodiment of the invention, the second set of external connectors comprises a plurality of connector units, wherein each connector unit includes a blanking pin configured for connection to a specific respective socket of said core test unit.

Thus, embodiments of the present invention provide a generic and highly configurable test facility that can be used to test virtually any blackbox (for example, mission computer, fuel system, engine management system, etc) from any platform (air, land sea). It will be appreciated that the resultant test facility can thus be used in many situations to achieve many goals. For example, it can be used in forward positions to support first and second line debug and analysis of suspect software; it can be used to undertake Pre-Integration tests (namely testing of equipment delivered by vendors prior to the equipment being integrated with other equipment and systems); it can also be used to host a mission computer during software qualification testing. It is also envisaged that a test facility could be used to test another, similar test facility, or even one or more adaptor units.

A number of key benefits are obtained by exemplary embodiments of the invention. For example, there is a significant cost benefit in providing a generic and configurable test facility, compared with individual single user rig facilities for each test required to be performed. Furthermore, several such generic test facilities can be configured to test a particular type of blackbox, thereby reducing reliance on a single user test rig and accommodating high demand applications. It is envisaged that, once a test facility has been configured and verified, it can be used to test other, similar test facilities. Indeed, once a test facility and one or more adaptor units have been configured and verified, it is envisaged, that copies of the adaptor unit(s) can be tested using the core test unit, simply by connecting the copied adaptor unit to the core test unit and configuring a loop back circuit at the connectors normally configured to connection to a blackbox.

Thus in accordance with another aspect of the present invention, there is provided a method of testing a unit or system using apparatus substantially as described above, the method comprising:
- selecting an adaptor unit corresponding to said unit or system and connecting said selected adaptor unit between said core test unit and said unit or system to be tested;
- entering, or causing to be entered, via said user interface module, test data for said unit or system to be tested; and
- obtaining, via said user interface module, test data thus generated.

In accordance with yet another aspect of the present invention, there is provided a method of testing an adaptor unit using apparatus substantially as described above, the method comprising:
- connecting an input end of said adaptor unit to be tested to said core test unit;
- configuring, at an output end of said adaptor unit to be tested, a loop back circuit;
- entering, or causing to be entered, via said user interface module, test data for said adaptor unit to be tested; and
- obtaining, via said user interface module, test data thus generated.

Exemplary embodiments of the invention may include a highly configurable Graphical User Interface that can allow a user to immediately interact with a 'test facility' with which they consider themselves to be familiar, thereby reducing unnecessary complexity. The footprint of the proposed generic test facility can be relatively very small compared with known test rigs, such as the one described above. The proposed test facility can be relatively easily reconfigured, as required, and protection against obsolescence, and the associated costs, can be provided by using COTS plug and play components, which have the additional benefit of being able to provide the user with a consistent and familiar interface and capability.

These and other aspects of the present invention will be apparent from the following specific description, in which embodiments of the invention are described, by way of examples only, and with reference to the accompanying drawings in which:
Figure 1 is a schematic block diagram illustrating the three-layered design of a test rig system according to an exemplary embodiment of the present invention;
Figure 2 is a schematic diagram illustrating the test rig system of Figure 1 in more detail;
Figure 3 is a schematic diagram (partially) illustrating the hardware layout of a test rig system according to an exemplary embodiment of the present invention; and
Figure 4 is a schematic circuit diagram of a two phase lockout circuit for use in an adaptor unit according to an exemplary embodiment of the present invention.

In general, the concept of a generic test facility according to exemplary embodiments of the invention is that it is a general purpose, configurable unit that can take control of stimulating and monitoring almost all electrical input/output from, for example, avionics equipment.

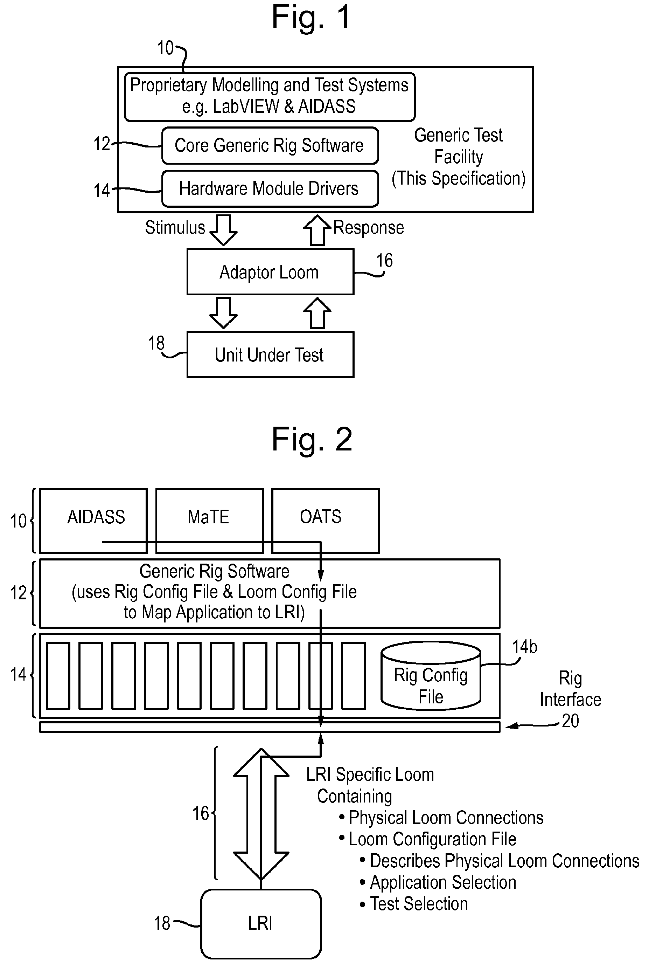

Thus, referring to Figure 1 of the drawings, a test rig system according to an exemplary embodiment of the present invention utilises a three-layered approach, with each layer communicating through defined interfaces. As shown in Figure 1, the system comprises an upper layer 10, a middle layer 12 and a lower layer 14.

The upper layer 10 provides the user interface and test application of choice, and may be selected from a number of proprietary modelling and test systems configurations, such as National Instruments' LabVIEW or TestStand and AirBus' AIDASS for example, which will be familiar to a person skilled in the art.

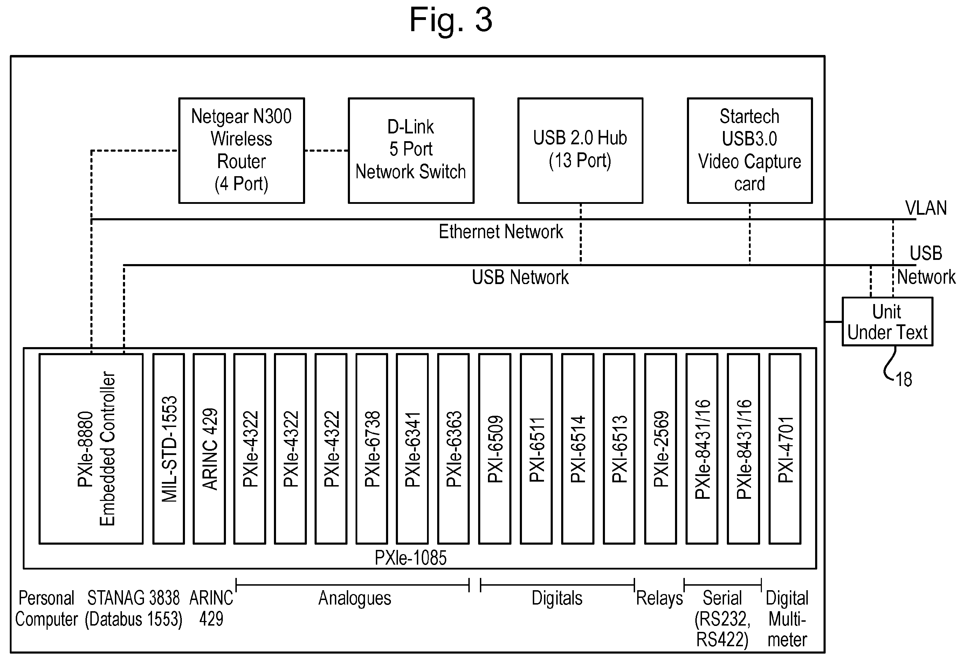

The middle layer 12 provides the core capability of the rig and it is envisaged that this element may be common to all deployments of the system. Thus, the middle layer 12 comprises a plurality of software modules (such as NI LabVIEW or other .net languages), each being configured to recreate the electrical environment of the system that a respective unit under test (UUT) operates in. The lower layer 14 comprises the drivers associated with each of the above-mentioned software modules, and more specifically the signals they are required to accommodate. All hardware supporting the above-described system elements may comprise commercially available computers and distributed input/output (I/O) modules to allow the system to interact with external systems, as illustrated schematically in Figure 3 for example.

Referring additionally to Figure 2 of the drawings, it can be seen that the upper layer 10 provides the option for the user interface and test application to be configured as required. A user may select from a number of different (known) proprietary modelling and test system configurations according to preference and familiarity. In Figure 2, AIDASS (AirBus), MaTE (Modelling and Test Environment) and OATS (Open Architecture Test System) are shown, but others will be known to a person skilled in the art and the present invention is not necessarily intended to be limited in this regard. A development application such as LabVIEW or TestStand (National Instruments) may also be provided as a selectable/configurable option.

As stated above, the middle layer 12 contains the generic rig software modules (which could again, for example, be NI LabVIEW or other .net languages). A selected software module (for a specific application) is activated using rig configuration and loom configuration files, which are configured to map a selected software module or 'application' to the unit under test (UUT) or LRI 18.

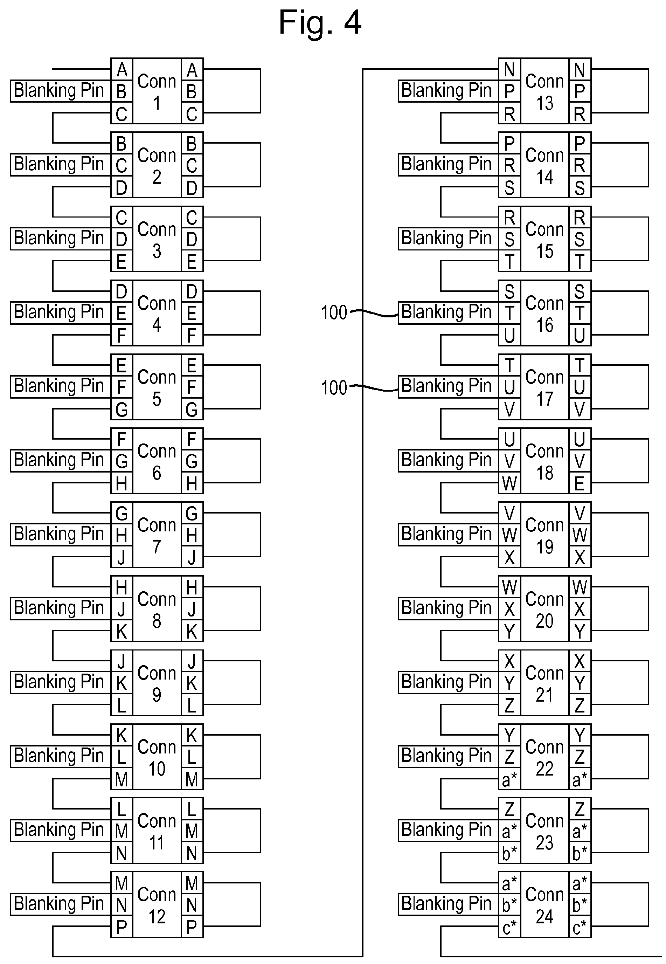

The lower layer 14 contains the drivers 14a associated with the software modules in the middle layer 12. Also provided, is a rig configuration file 14b. In order to configure the system to perform a specific test, an adaptor unit or 'loom' 16 must be connected between the system (via the rig interface 20) and the LRI 18. The loom 16 is provided, on one side, with the specific physical connectors required to connect it to the LRI 18, and may include connections to specialist equipment as required by the test. On the other side, the physical connectors required to facilitate a data transfer path between it and the system are provided. It is essential that external connections are not mismatched, otherwise damage to the LRI 18 can result. Thus, an exemplary embodiment of the present invention includes so-called two phase lockout functionality, that ensures mechanical and electrical integrity of the connections made. Referring to Figure 4 of the drawings, there is illustrated schematically a circuit for checking the integrity of the test rig system. More specifically, the physical connectors of a loom 16, for connection to the test rig system, are illustrated schematically. It can be seen that, in this exemplary embodiment, 24 connectors C1-C24 are provided, wherein each connector includes a blanking pin 100 configured to be inserted in a unique socket in the test rig system, such that the connectors cannot physically be connected in the wrong sockets, thereby providing a first (mechanical) level of protection. Furthermore, power is restricted when the lockout circuit is not enabled, thereby providing a second (electrical) level of protection to avoid damage to the LRI 18.

Thus, a specific loom 16 for a specific test and specific LRI type is selected and connected between the system and the LRI 18. The loom 16 also includes a data storage element (such as an embedded memory stick) on which is stored operational data in the form of a loom configuration file. Once the loom 16 has been connected between the LRI 18 and the rig interface 20, the loom configuration data is transferred to the generic rig software layer 12. The loom configuration data includes data describing the physical loom connections, data representative of a selected software module or application (associated with that particular loom) and data representative of the specific test (associated with that particular loom). Thus, the loom configuration data can be used by the generic rig software layer 12 to select the required application and test. A rig configuration file 14b is selected/configured accordingly to configure the required driver(s) for the defined physical connections and associated signal types, thus completing the configuration process to map the selected application/test to the LRI 18.

The rig configuration file 14b is selected to conform to the signal type(s) required for the specific LRI 18. Thus, the system itself may comprise a plurality of selectable rig configuration files designed to accommodate and manage a respective plurality of common signal types, including (but not necessarily limited to):
- Static Discretes
- Static Analogues
- Dynamic Analogues
- References
- RS232
- RS422/485
- Ethernet
- STANAG 3838
- STANAG 3910
- Arinc 429
- Video (e.g. image comparison, OCR, image capture)

Indeed, the rig configuration file will ultimately contain:
- data representative of the current physical rig, as configured and populated;
- data representative of the current physical 'subset' of application(s) selected; and
- data defining the available hardware 'subset' at the rig interface 20.

Each loom 16 may be 'keyed', and the operational data or loom configuration file stored in a loom may thus include key data which can be used by the rig software layer 12 to 'unlock' a selected software module or application. As stated above, a two phase lockout circuit is provided within the loom 16, such that it is only enabled if it is correctly connected to the test rig system, thus enabling the key data to be transferred to the rig software layer 12. In addition, and as stated above, the loom configuration file (which may be embedded in the loom 16 on a memory stick, for example) contains:
- data defining the choice of test application;
- data defining mapping of the application to the generic rig software 12; and
- data defining mapping of the LRI 18 to the rig interface 20.

The user interface (provided by the upper layer 10) is configured to provide the user with:
- command line control and monitoring of signals;
- graphical user interface and monitoring of signals;
- dynamic control of appropriate signals, including ramp up, ramp down, triangle, sinusoidal and square wave;
- test script control and monitoring of signals.

Thus, returning to Figure 2 of the drawings, once a specified test system is configured, a user can enter the required data values for testing via the user interface provided by the upper layer 10. Additionally, or alternatively, automated testing can be facilitated by causing predetermined data values for testing to be entered from a file. Static control data values, as well as dynamic control data, can be entered (or otherwise caused to be entered) in a manner familiar to a person skilled in the art. The user is also provided with the facility to write and enter test scripts to perform a repeatable set of tests. Data, thus entered, is transferred to the appropriate, configured software module within the middle layer 12, which is configured to simulate the electrical environment of the specific UUT 18 by generating one or more stimulus signals in response to the input data. The stimulus signal is transmitted to the UUT/LRI 18, via the physical connections to the loom 16, and response data generated by the LRI 18 is subsequently transmitted back to the application for processing. The results of such processing are transferred back to the upper layer 10 for analysis and display/reporting to the user.

It is envisaged that a generic test facility according to a specific exemplary embodiment of the invention may provide dedicated means of controlling/monitoring the following types of signals:
- Discretes I/O
   o Inputs (Write/Provide)
      ▪ 96 (-30V..+30V) - including 0V
   o Outputs (Read)
      ▪ 96 (-30V..+30V) - including 0V
   Bi-Directional
- 178 (-10V..+10V) - including 0VAnalogues I/O
   o Single Analogue Inputs (Write/Provide)
      ▪ 38 x Type A (-10..10V)
   o Differential Analogue Inputs (Write/Provide)
   ∘ 24 High Speed (-16V..+16V)Outputs (Read)
      ▪ 48x Type A (-10..10V)
- Synchros
   ∘ 6 x Synchros (26V AC, Neutral and Signal Ground)
- 16 x RS232
- 16 x RS422
- 5 x Ethernet Ports
- 2 channels of dual redundant MIL-STD-1553B Databus
- 1 channel of dual redundant MIL-STD-1773 Databus
- 32 bi directional channels of ARINC 429
- Relays: 100 latching relays
- 1 XYZ display
- 3 RGB displays
- 28V 25A DC
- 115V 1 A 3Phase AC 400 Hz
and a specific exemplary (hardware) layout is partially illustrated in Figure 3 of the drawings. It will be appreciated that, on many LRIs, there are specialist or uncommon signal types. It is envisaged that these will interface directly with specialist equipment to stimulate or monitor the specialist signals.

It is envisaged that the described generic test facility may comprise a portable chassis requiring only a 230V 13A supply. It can thus be used on a workbench or bolted into a rack. Provision may also be made to add 115V 400Hz AC if required.

Thus, aspects of the present invention combine, in a novel and innovative manner, three key concepts that, together, provide a powerful solution to the problems outlined above in relation to prior art test rigs and facilities, namely by dramatically decreasing costs, as well as providing portability and versatility.

At the centre of embodiments of the invention, there is provided a 'superset' test facility comprised of a core test unit on which is loaded a plurality of software modules, wherein each software module is configured to perform a specified test in respect of a specified blackbox type. This core test unit, thus configured, can be provided with all of the design, drawing set, testing, EMC, CE-marking, paperwork (including safety related paperwork) and signatures required for statutory certification of any test rig. The end user can then configure the core test unit to embody only the one or more test facilities they require for a specific application, which may result in a versatile rig capable of testing many different blackboxes or, alternatively, a cost effective single user rig for a specific test situation. Tests envisaged include those associated with software qualification, systems integration and ground tests, but other applications will be apparent to a person skilled in the art and the present invention is not necessarily intended to be limited in this regard. Indeed, it is envisaged that, once a test rig system has been configured and verified, it could be used in the manner described above to test another test rig system (i.e. the second test rig system becomes the "blackbox"). Alternatively, or in addition, a configured test rig system can be used to test copies of previously verified looms in the manner described above, simply by connecting the loom to be tested to the core test unit, and providing a loopback circuit at the physical connectors used in previous examples to connect the loom 16 to the LRI 18. Furthermore, throughout the above description, reference has been made to avionics and ground testing associated with the field of avionics, but it will be appreciated by a person skilled in the art that the present invention may be equally applicable to platform testing in other fields (i.e. land or sea, for example) and the present invention is not necessarily intended to be limited in this regard.

In addition, a versatile interface between the rig and the blackbox(es) is envisaged. In order to facilitate this, embodiments of the present invention provide a plurality of adaptor units or 'looms', each loom being associated with a specific blackbox, and having the required connectors for that blackbox on one end with the generic rig test facility connector (interface) on the other. All connectors may be keyed, with interlocks being built in to ensure correct connection and electrical safety (for example, the two phase lockout functionality described above in relation to Figure 4 of the drawings).

Finally, a powerful Graphical User Interface (GUI) is envisaged, that can be easily and quickly configured to 'look' like any existing physical test equipment, thereby providing the user with an interface that they are immediately comfortable and familiar with. Furthermore, it is envisaged that the core test facility will be able to utilise existing test scripts, where appropriate, but can also be configured to re-write obsolete test scripts in a modern script whilst retaining its original functionality, as well as adding extra functionality, such as automated testing of a "blackbox"..

Overall, significant benefits are perceived to be associated with various embodiments of the present invention, including the fact that it is cost effective, modular, has a common core capability that can be relatively easily configured, reconfigured and adapted according to requirements, can facilitate optional specialist extras where required, is extendable, versatile and mobile. Furthermore, the described system can also be used, not only to test a blackbox or LRI, but also another test rig system or even a loom, as described above.

It will be apparent to a person skilled in the art, from the foregoing description, that modifications and variations can be made to the described embodiments without departing from the scope of the invention as defined by the appended claims.

## Claims

1. Test apparatus comprising:
- a computer-implemented core test unit having loaded therein a plurality of software modules, each software module having a driver associated therewith, and being configured, when activated, to perform a respective specified test by simulating a predetermined condition, generating at least one stimulus signal and receiving response data;
- a plurality of adaptor units, each adaptor unit being configured to be connected between said core test unit and a unit under test so as to facilitate data transfer therebetween, wherein each adaptor unit is associated with a respective software module of said core test unit and includes a data storage module having stored therein operational data configured to activate a specified software module, including a respective driver, when it is connected and said operational data is transferred to said core test unit, in use, and each said adaptor unit being configured to effect data transfer between said respective specified software module, when activated, and said unit under test by transmitting said at least one stimulus signal received from said specified software module to said unit under test and transmitting said response data received from said unit under test to said specified software module; and
- a user interface module configured to output, in use, test data generated using said response data.

2. Apparatus according to claim 1, wherein said core test unit comprises three operational layers, wherein an interface is defined between adjacent layers to facilitate communication therebetween.

3. Apparatus according to claim 2, wherein the core test unit comprises a first layer supporting a configurable user interface, a second layer including said plurality of software modules, and a third layer accommodating said plurality of drivers.

4. Apparatus according to claim 3, wherein said third layer additionally contains a rig configuration file for receiving and/or storing data representative of said unit under test and data representative of at least one of said activated software modules.

5. Apparatus according to any of the preceding claims, wherein said operational data stored in said data storage module comprises data representative of at least one software module to be activated, data defining a mapping of said activated software module to said core test unit and data defining a mapping of said unit under test to said core test unit.

6. Apparatus according to any of the preceding claims, wherein each adaptor unit comprises one or more physical connectors configured to connect said adaptor unit to a respective unit under test.

7. An avionics ground test system comprising apparatus according to any of the preceding claims, wherein said software test modules are each configured to perform an avionics ground test, and each said unit under test comprises an avionics blackbox.

8. An adaptor unit for test apparatus according to any of claims 1 to 6, or a system according to claim 7, comprising a housing having a first set of one or more external physical connectors configured to electrically connect said adaptor unit to a specified unit under test, and a second set of one or more external physical connectors configured to electrically connect said adaptor unit to said core test unit, said housing including a data storage element on which is stored said operational data.

9. A unit according to claim 8, wherein the second set of one or more external physical connectors is configured to prevent incorrect mechanical connection of the adaptor unit to said core test unit.

10. A unit according to claim 8 or claim 9, wherein the second set of one or more external connectors is configured to restrict or prevent power transfer between said adaptor unit and said core test unit, unless and until said adaptor unit is correctly connected to said core test unit.

11. A unit according to any of claims 8 to 10, wherein the second set of one or more external connectors comprises a two-phase lockout circuit, configured to prevent incorrect mechanical connection of the adaptor unit to said core test unit and/or monitor the integrity of a connection between said adaptor unit and said core test unit and prevent power transfer therebetween unless and until they are correctly connected.

12. A unit according to claim 11, wherein the second set of external connectors comprises a plurality of connector units, wherein each connector unit includes a blanking pin configured for connection to a specific respective socket of said core test unit.

13. A method of testing a unit or system using apparatus according to any of claims 1 to 6, the method comprising:
- selecting an adaptor unit corresponding to said unit or system and connecting said selected adaptor unit between said core test unit and said unit or system to be tested;
- entering, or causing to be entered, via said user interface module, test data for said unit or system to be tested; and
- obtaining, via said user interface module, test data thus generated.

14. A method of testing an adaptor unit using apparatus according to any of claims 1 to 6, the method comprising:
- connecting an input end of said adaptor unit to be tested to said core test unit;
- configuring, at an output end of said adaptor unit to be tested, a loop back circuit;
- entering, or causing to be entered, via said user interface module, test data for said adaptor unit to be tested; and
- obtaining, via said user interface module, test data thus generated.
